# EUROPEAN PATENT APPLICATION

(11) **EP 3 306 532 A1**
(43) Date of publication of application: **11.04.2018**
(21) Application number: 16192400.6
(22) Date of filing: 05.10.2016
(51) Int. Cl.: G06K 19/077, B41M 5/26, B42D 25/00, G03C 1/00

(54) **A LASER MARKABLE RFID TAG**

(71) Applicant: AGFA-GEVAERT, 2640 Mortsel (BE); AGFA NV, 2640 Mortsel (BE)
(72) Inventor: GOETHALS, Fabienne, 2640 Mortsel (BE); VANDER AA, Joseph, 2640 Mortsel (BE); GEELEN, Rene, 2640 Mortsel (BE)
(74) Representative: Viaene, Kris

(57) **Abstract**

The invention is directed to a laser markable RFID tag (1) comprising a RFID transponder (20) and a laser markable layer (10) and to an article or packaging comprising such a laser markable RFID tag (1).

## Description

### Technical field of the Invention

The present invention relates to a laser markable RFID tag and to consumer goods comprising such a laser markable RFID tag.

### Background art for the invention

Serialization, identification and authentication become more and more important in the manufacturing of packaging, especially in for example pharmaceutical packaging and packaging of luxury goods.

Serialization, identification and authentication refer to the assignment and placement of unique markings on a primary package. Such unique markings include human-readable letter/number codes, machine readable codes or RF-ID tags.

A barcode is an optical, machine-readable, representation of data. Originally, barcodes represented data by varying widths of and spacings between parallel lines. Such barcodes are typically referred to as linear or one-dimensional (1 D) barcodes. Later, two-dimensional (2D) codes were developed using rectangles, dots, hexagons and other geometric patterns in two dimensions. Although such 2D codes do not use bars as such they are usually referred to as 2D barcodes. Compared to 1 D barcodes, 2D barcodes can contain much more information.

The most common 2D barcodes used today in industry are the QR Code (Quick Response Code) and the Data Matrix code. The QR code system became popular due to its fast readability and high storage capacity.

The barcodes can be read by an imaging device, such as a camera or a scanner, and then analysed using a programmed processor. Nowadays, the barcodes can also be read by a mobile device equipped with a camera and the proper software.

A radio-frequency identification (RFID) system typically uses RFID tags or labels attached to the objects to be identified. Two-way radio transmitter-receivers, often called interrogators or readers, send a signal to the tag or label and read its response.

Both identification means have their advantages and disadvantages. For example, barcodes are much smaller and lighter and less expensive compared to RFID tags. However, barcodes have no read/write capabilities, are more easily damaged and need to be individually scanned. RFID tags on the other hand can be read from a greater distance compared to barcodes, do not need to be positioned in a line of sight with the scanner, have read/write capabilities, and can store more information.

Using both an RFID tag and a barcode increases the amount and sort of data that may be stored on a packaging. Also, when the RFID tag and the barcode contain, at least partial, identical information, they can be used as backup for each other in case one of them becomes non-readable.

WO2005/124673 discloses a packaging equipped with at least two data storage elements, wherein the first data storage element comprises an RFID-transponder and the second data storage element comprises a printed code, for example a barcode, which is at least in part non-visible to the unaided human eye. The barcode is applied by inkjet printing, thermal printing or toner printing.

To render counterfeiting more difficult and/or due to restricted space available on the packaging, it might be advantageous to provide the barcode and the RFID tag on top of each other. Moreover, in such a configuration, the barcode and the RFID tag may be provided on the packaging together in a single step.

However, RFID tags may be damaged, i.e. become unreadable, when a barcode is printed on top of it, for example due to the heating step when using toner printing or thermal printing.

The barcode may be first applied on a label wherein that label is then applied on the RFID tag. However, such a method is complex and requires more additional labelling.

EP-A 2407914 discloses an RFID tag affixed to a thermo-reversible recording medium. The information marked in the thermo-reversible recording medium may be erased and replaced by new marked information. The thermo-reversibility renders the information stored on the packaging prone to counterfeiting.

EP-A 1657072 discloses a method of making a black barcode on a substrate by laser marking. In the method, a laser markable ink comprising a solvent, a binder and an oxyanion of a multivalent metal is applied on a substrate and laser marked using a CO₂ laser.

EP-A 2722367 discloses a method of laser marking wherein one or more colours may be laser marked. The laser markable layers preferably comprise a leuco dye, a developing agent and/or a developing agent precursor, and an IR dye.

### Summary of the invention

It is an object of the invention to provide a consumer good or a packaging comprising an RFID tag and an image superposed on each other, the combination of which is difficult to counterfeit.

This object has been realized by the RFID tag according to claim 1.

Further advantages and embodiments of the present invention will become apparent from the following description.

### Brief description of the drawings

Figure 1 represents a schematic representation of an RFID inlay.
Figure 2 represents a schematic representation of an embodiment of a laser markable RFID label.
Figure 3 represents a schematic representation of another embodiment of a laser markable RFID label.
Figure 4 represents the 1 D barcode that has been laser marked in the examples.
Figure 5 represents the QR code that has been laser marked in the examples.

### Detailed description of the invention

### Definitions

The term "monofunctional" in e.g. monofunctional polymerizable compound means that the polymerizable compound includes one polymerizable group.

The term "difunctional" in e.g. difunctional polymerizable compound means that the polymerizable compound includes two polymerizable groups.

The term "polyfunctional" in e.g. polyfunctional polymerizable compound means that the polymerizable compound includes more than two polymerizable groups.

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2Dimethylpropyl and 2-methyl-butyl, etc.

Unless otherwise specified a substituted or unsubstituted alkyl group is preferably a C₁ to C₆-alkyl group.

Unless otherwise specified a substituted or unsubstituted alkenyl group is preferably a C₂ to C₆-alkenyl group.

Unless otherwise specified a substituted or unsubstituted alkynyl group is preferably a C₂ to C₆-alkynyl group.

Unless otherwise specified a substituted or unsubstituted aralkyl group is preferably a phenyl or naphthyl group including one, two, three or more C₁ to C₆-alkyl groups.

Unless otherwise specified a substituted or unsubstituted alkaryl group is preferably a C₇ to C₂₀-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester, amide, ether, thioether, ketone, aldehyde, sulfoxide, sulfone, sulfonate ester, sulphonamide, -Cl, -Br, -I, -OH, -SH, -CN and -NO₂.

An RFID transponder as used herein consists of a chip and an antenna.

An RFID inlay consists of an RFID transponder applied on a carrier.

An RFID tag is the assembly comprising an RFID inlay that is attached to the article to be identified.

### RFID System

An RFID system is made up of two components:
- an RFID transponder, which is located on the article to be identified, and
- a reader, which, depending upon the design and the technology used, may be a read or write/read device.

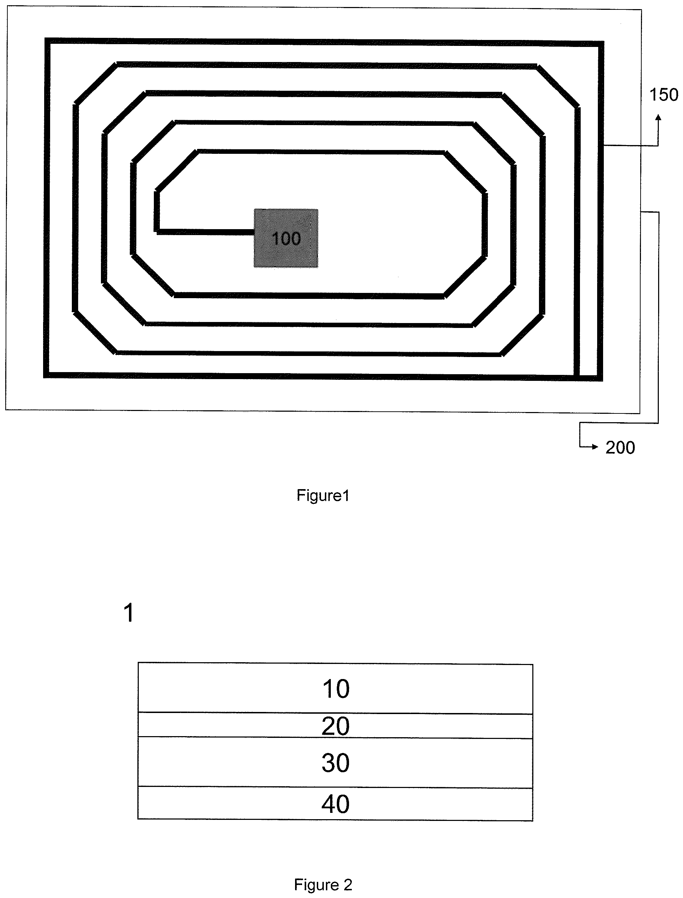

An RFID transponder (Figure 1) typically consists of an antenna (150) for receiving and transmitting a Radio-Frequency (RF) signal; and a microchip (100), also referred to as an integrated circuit, for storing and processing information, modulating and demodulating the RF-signal, collecting DC power from the incident reader signal, and other specialized functions.

The antenna drives the performance and governs how well the transponder will work in a particular application. Precision-designed to receive and broadcast RF signals, the antenna is made from a conductive material, such as silver, copper or aluminium. The antenna makes contact with an RF reader over a distance determined in large part by the amount of metal and size of the antenna.

The chip design determines the protocol or class of the operation of the transponder. Different microchips have different features that can also affect performance. RFID microchips contain circuitry capable of handling a variety of functions from power conversion to data storage and retrieval.

Chipless RFID transponders do not have a microchip and may consists of an antenna only. As the chip is the most expensive part of an RFID transponder, the costprice of such a chipless RFID transponder is substantially cheaper compared to conventional ones. In addition, a chipless RFID transponder may be fully printable on the article to be identified.

An RFID transponder is typically provided on a carrier (Figure 1, 200), also referred to as the backing material. The carrier is typically paper or plastic. Such an assembly is often referred to as an RFID inlay. An RFID inlay (Figure 1) thus consists of a microchip attached to an antenna and provided on a carrier.

Such an RFID inlay is then typically supplied to a converter where it is inserted into a label or tag, or whatever construction is required for the application.

Active RFID tags can transmit their data under their own power, using an onboard battery. As a result, they can have very long read ranges. As such active RFID tags are more expensive than passive tags, they are typically used to tag high-value items.

Passive RFID tags are the most commonly used tags. They are cheaper and smaller because they have no battery. The tag uses the radio energy transmitted by the reader. However, to operate a passive tag, it has to be positioned close to the reader in order to receive high enough radio energy.

A battery-assisted passive tag has a small battery on board and is activated when in the presence of an RFID reader.

Tags may either be read-only or may be read/write enabling the addition and/or modification of data.

An RFID reader transmits an encoded radio signal to interrogate the tag. The RFID tag receives the message and then responds with its identification and other information. This may be only a unique tag serial number, or may be product-related information such as a stock number, lot or batch number, production date, or other specific information. Since tags have individual serial numbers, the RFID system design can discriminate among several tags that might be within the range of the RFID reader and read them simultaneously.

Nowadays RFID tags are also readable by a mobile device equipped with NFC (Near Field Communication) and a suitable software-application (so-called app).

### Laser markable RFID tag

An RFID tag is the assembly comprising an RFID inlay, which is attached to the article to be identified.

The laser markable RFID tag according to the present invention comprises a laser markable layer.

With such laser markable RFID tag it is possible to laser mark a permanent image, in contrast to a reversible image, on the RFID tag.

The lasermarked "image" comprises data, images, barcodes, etc.

In a preferred embodiment, the laser markable RFID tag is a laser markable RFID label (1) comprising a laser markable layer (10), an RFID inlay (20), an adhesive (30) and a release liner (40).

In another preferred embodiment, the laser markable label (5) comprises a protective and/or printable layer (50) on top of the laser markable layer (10). That protective and/or printable layer has to be sufficiently transparent for the infrared laser used to laser mark the RFID tag.

A release liner is a film, paper, or coated paper material that is coated with for example silicone. The coated side of a release liner preferably has pressure sensitive adhesive applied to it. The release liner protects the adhesive until the label is applied. The silicone coating ensures clean removal of the laser markable layer, the RFID inlay and the adhesive from the release liner.

A pressure sensitive adhesive is applied to a release liner and then affixed to for example the RFID inlay. To stick the label onto an article, the adhesive requires pressure either by hand or by application equipment.

When the laser markable RFID label is prepared by laminating the layers described above together, it is preferred to use a laser markable laminate consisting of a laser markable layer coated on a transparent support. After lamination, the transparent support may act as the protective layer (50) described above.

Preferred transparent supports include cellulose acetate propionate or cellulose acetate butyrate, polyesters such as polyethylene terephthalate and polyethylene naphthalate, polyamides, polycarbonates, polyimides, polyolefins, polyvinyl-chlorides, polyvinylacetals, polyethers and polysulphonamides. In a most preferred embodiment, the transparent polymeric support is a biaxially stretched polyethylene terephthalate, which is very durable and resistant to scratches and chemical substances.

The transparent support may be provided with subbing layers to enhance the adhesion between the support and the laser markable layer.

The laser markable RFID label may also be prepared by applying a laser markable layer, and optionally a protective and/or printable layer, on RFID labels that are commercially available.

The laser markable layer may be provided by applying a laser markable composition with co-extrusion or any conventional coating technique, such as dip coating, knife coating, extrusion coating, spin coating, spray coating, slide hopper coating and curtain coating.

Alternatively, the laser markable compositions may be provided with a printing method such as intaglio printing, screen printing, flexographic printing, offset printing, inkjet printing, gravure offset printing, tampon printing, etc.

When using a chipless RFID, consisting for example of a silver antenna, the RFID may be applied directly on the packaging, for example by printing. A laser markable layer can then be coated or printed on the printed RFID. Silver inks, which may be used to print a chipless RFID, and methods to provide conductive patterns on a substrate, are for example disclosed in EP-A 2671927, EP-A 2781562 and EP-A 3037161.

To improve the daylight stability and/or weather resistance of the laser marked image, it may be advantageous to provide a top coat on the laser markable layer wherein the top coat may contain one or more UV absorbing compounds or one or more light stabilizing compounds, such as for example acid scavengers. The same UV absorbers or acid scavengers as used in the laser markable composition and disclosed below may be used in the top coat.

It may also be advantageous to incorporate water barrier properties into the packaging to improve the stability of the laser marked image in high humid conditions, for example by incorporating one or more intermediate and/or top layers having such water barrier properties.

When one laser markable composition is used, one colour may be formed. The composition may be optimized, for example by selecting the proper leuco dye or mixture of leuco dyes, in order to obtain a desired colour.

Multiple colours may be obtained by using two or more laser markable compositions, which are preferably applied on top of each other. For example a full colour image may be obtained by using three laser markable compositions forming a cyan or blue, a magenta or red and a yellow colour upon laser marking.

The ability to laser mark multiple colours may be used to produce coloured barcodes. Such colour barcodes may store more information. An example of such a colour barcode is the High Capacity Colour Barcode (HCCB) developed by Microsoft.

The multicolour ability may also be used for aesthetic reasons or to combine the barcode with other information in another colour. For example a black and white barcode may be combined with a company logo in another colour.

### Laser marking

In principle any laser may be used in the laser marking step. Preferred lasers are ultraviolet (UV) and infrared (IR) lasers, infrared laser being particularly preferred.

The infrared laser may be a continuous wave or a pulsed laser.

For example a CO₂ laser, a continuous wave, high power infrared laser having an emission wavelength of typically 10600 nm (10.6 micrometer) may be used.

CO₂ lasers are widely available and cheap. A disadvantage however of such a CO₂ laser is the rather long emission wavelength, limiting the resolution of the laser marked information.

To produce high resolution laser marked data, it is preferred to use a near infrared (NIR) laser having an emission wavelength between 780 and 2500, preferably between 800 and 1500 nm in the laser marking step.

A particularly preferred NIR laser is an optical pumped semiconductor laser. Optically pumped semiconductor lasers have the advantage of unique wavelength flexibility, different from any other solid-state based laser. The output wavelength can be set anywhere between about 920 nm and about 1150 nm. This allows a perfect match between the laser emission wavelength and the absorption maximum of an optothermal converting agent present in the laser markable layer.

A preferred pulsed laser is a solid state Q-switched laser. Q-switching is a technique by which a laser can be made to produce a pulsed output beam. The technique allows the production of light pulses with extremely high peak power, much higher than would be produced by the same laser if it were operating in a continuous wave (constant output) mode, Q-switching leads to much lower pulse repetition rates, much higher pulse energies, and much longer pulse durations.

The lasermarked "image" comprises data, images, barcodes, etc.

Using a laser marking step to produce the image on the RFID tag instead of a conventional printing technique such as inkjet printing, thermal printing or toner printing as dislosed in WO2005/124673 results in several advantages.

Laser marking does not require post-processing necessary to fix the "printed" image on the RFID tag, for example a UV or heat curing. Such post-processing may result in malfunctioning of the RFID tag. In addition, this fact simplifies the process to manufacture the RFID tag.

A higher resolution of the image may be obtained because a laser, in combination with a XY-addressable system (for example a galvo-system), can have an addressability of 14000 dots per inch (dpi) or even higher. 14000 dpi correspond with a dot or pixel size of 1.8 µm.

As laser marking is a continuous tone (contone) imaging technique, the density of a single dot on a material can be varied quasi-continuously by changing the laser power. Therefore, there is no need to sacrifice addressability in exchange for producing many gray levels. Offset and inkjet printing are binary techniques, i.e. are only able to produce white or black, or at best multi-level (2, 3, to 8 levels). These printing techniques therefore have to sacrifice addressability in order to be able to produce a multitude of gray levels.

Another advantage of using laser marking instead of conventional printing techniques lies in the fact that a laser can penetrate inside the laser markable layer or even trough a transparent layer positioned on top of the laser markable layer and can therefore produce an image inside the layer or a deeper laying layer. Conventional printing techniques on the other hand can only print on the surface of materials. Therefore, an image printed with conventional printing techniques is more prone to damage compared to an image formed inside a laser markable layer by laser marking. To protect an image printed with conventional printing techniques, a coating or varnish may be applied on the printed image. However this means an extra complexity of the production process. So laser marking can produce an image in sub-surface layers without a need to add protection layers afterwards.

Laser marking has a much higher working-distance, meaning the free distance between the RFID tag and the front-end of the marking device, for example the lens of the laser. A typical working distance for a laser marking device is of the order of many centimetres, for example 15 cm. In inkjet printing for example, the throwing distance, i.e. distance between the printhead and the packaging, is in the order of millimetres, while offset printing is a contact printing technique. A larger working distance may be beneficial, for example to laser mark uneven surfaces.

No dust is generated with laser-marking, especially when using leuco dye technology, which is usually the case with carbonization or destructive formation of images (for example laser engraving) with high power laser systems. Next to that, no chemicals are released in the environment during the imaging process. This is especially of relevance for applications such as pharmaceutical packaging where the GMP (Good Manufacturing Principle) is especially important.

When two or more lasers are used to laser mark two or more laser markable compositions to produce two or more different colours, as described above, the difference of the emission wavelengths of the two or more infrared lasers is preferably at least 100 nm, more preferably at least 150 nm, most preferably at least 200 nm, particularly preferred by at least 250 nm.

### Packaging

The RFID tag on which an image may be applied by laser marking comprises a laser markable layer.

The laser markable RFID tag may be provided on any consumer good, for example clothing, apparatus, document, etc., but is preferably provided on a packaging, preferably a primary packaging.

The laser markable RFID tag is preferable a laser markable RFID label.

The RFID label may be laser marked off-line, i.e. before being applied on the packaging, or in-line, i.e. after being applied on the packaging.

Advantages of in-line laser marking are simplified logistics and inventory regarding the RFID labels. Laser marking may be carried in-line in the packaging process to include for example batch numbers, expiry dates, etc.

The laser marked "image" comprises data, images, barcodes, or a combination thereof. The image preferably comprises a 1 D or 2D barcode.

In a preferred embodiment the image is a QR code or micro QR code. A preferred QR code, which is more secure against counterfeiting, is disclosed in WO2015/067725. A preferred method to produce such QR code, which is more secure against counterfeiting and which comprises a laser marking step is disclosed in EP-A 16172257.4 (filed 1-05-2016).

There is no real limitation on the type of substrate used for the packaging. The substrates may have plastic, glass or metal surfaces or may have a surface containing cellulosic fibres, such as paper and cardboard. The substrate may be an unprimed substrate but may also be a primed substrate, for example to improve the adhesion of the laser markable RFID label to the substrate.

A preferred packaging is folded cardboard or corrugated cardboard laminated with paper. Such packaging is preferably used for cosmetics, pharmaceuticals, food or electronics.

The laser markable RFID label or tag is preferably used for high quality packaging of luxury goods, such as for example premium brand cosmetics. Such premium brand cosmetics are prone to counterfeiting and therefore it is important that the packaging of these products includes security features that are not easily copied.

According to another embodiment, the process of manufacturing a laser markable packaging is used for pharmaceutical packaging. For pharmaceutical packaging, track and trace requirements become more and more demanding to comply with the ever evolving legislation.

The barcode may serve as a backup for, at least part, of the information encoded in the RFID transponder, or vice versa. This has the advantage that, in case information stored in the barcode is not accessible anymore, it can be retrieved from the RFID transponder, or vice versa.

The barcode and the RFID transponder may also contain different information.

When the barcode contains, at least partially, information contained in the RFID transponder, that information may be laser marked after reading it from the RFID transponder. Thus, the barcode has a backup function for the most sensitive information, which is stored in the RFID transponder, preventing complete loss of data in case of damage of the transponder. When the barcode contains additional information, it has a second security function in case of counterfeiting.

In another embodiment, the laser marked image may contain necessary information for providing access to the information stored in the RFID transponder, or vice versa. That necessary information may be a code or cryptographic key.

The first data storage element, for example the laser marked barcode, may be designed only as means for providing access to the second data storage element, for example the RFID transponder, without itself containing any further information concerning the article comprising the RFID tag.

EP-A 16172344.0 (filed on 31-05-2016) discloses an authentication method using an RFID tag provided with a printed optical-machine-readable code, such as for example a 1 D or 2D barcode comprising the steps of reading the optical-machine-readable code using a mobile device, determining if the code comprises a command for reading the RFID, and executing the command on the mobile device for reading the RFID tag.

A method of authentication an article or a packaging according to the present invention comprises a laser marked RFID tag as described above comprising the steps of:
- reading the information contained in the laser marked image, for example a 1 D or 2D barcode, using a digital imaging device,
- determining if the read information contains a command for reading the RFID transponder, and
- executing the command and reading the information contained in the RFID transponder.

Preferably, all steps of the authentication method are preformed using a mobile device.

### Track and Trace

The laser markable RFID tag may be used for so-called "track and trace"

### purposes.

Traceability is a major concern, and often a requirement for the medical and pharmaceutical community. In the event of a product recall, public safety and health are at risk. Manufacturers need the ability to quickly and positively identify and isolate all suspect products in the supply chain. Traceability is important for a packaging selected from the group consisting of food packaging, drink packaging, cosmetical packaging and medical packaging.

The basics of serialization (lot codes, batch codes, item numbers, time and date stamp) enable traceability from origination at the point of manufacture to the end of the supply chain. These data can stored as primary information in the 2D barcode. Serialization is important for consumer packaged goods, such as electronic components, toys, computers and other electronic consumer goods.

The laser markable RFID tag can also be used to check the authenticity of the product bought by a customer, for example by comparing the information stored in the laser marked barcode and the information stored in the RFID transponder, or by providing access to the information stored in the RFID transponder using information stored in the barcode, as described above. Currently, this is a great concern for pharmaceuticals, since many fake or inferior products circulate via the internet.

It is important that the authenticity of the laser marked RFID tag according to the present invention, and thus the product on which the tag is applied, may be checked at the same time when reading the information from the RFID tag.

### Laser markable composition

Any laser markable composition may be used to form the laser markable layer in the RFID tag.

According to one embodiment, the laser markable layer is capable of forming a black colour upon exposure to infrared radiation by carbonization of ingredients, typically the binder, of the laser markable layer.

Such a laser markable layer, disclosed in for example EP-A 2335967, preferably comprises polymers selected from polycarbonate (PC), polybutylene terephthalate (PBT), polyvinyl chloride (PVC), polystyrene (PS) and copolymers thereof, such as e.g. aromatic polyester-carbonate and acrylonitrile butadiene styrene (ABS). An optothermal converting agent, which absorbs infrared radiation and converts that radiation into heat, may be added to the laser markable layer to increase the marking density upon exposure to such infrared radiation.

Other laser markable compositions that may be used are those disclosed in for example WO2002/074548, comprising a binder and an oxyanion of a multivalent metal, such as ammonium octamolybdate (AOM), which may be laser marked using a CO₂ laser; WO2006/018640 and WO2012/114121, both comprising a diacetylene compound and which may be laser marked using a UV laser; WO2007/141522 comprising a marking component, for example AOM, and a metal salt, for example reduced indium oxide, that absorbs laser irradiation at 780 to 2500 nm and may be laser marked using a NIR laser.

Preferred laser markable compositions include a leuco dye. Such laser markable compositions are disclosed in for example EP-A 2648920. A leuco dye is a substantially colourless compound, which may react with for example a colour developing agent to form a coloured dye. The reaction may be triggered by exposure to laser irradiation. Depending on the type of leuco dyes, or mixture of leuco dyes, any colour may be obtained.

The colour laser markable layers may comprise an optothermal converting agent such as an infrared absorbing dye (IR dye) or an infrared absorbing pigment (IR pigment), both absorbing the IR radiation and converting it into heat.

Preferred laser markable compositions comprises a leucodye, an optothermal converting agent and a colour developing agent or colour developing agent precursor. The composition may further comprise an acid scavenger and a UV absorber.

Aqueous laser markable compositions, compared to solvent based compositions, are preferred for health and safety reasons.

Aqueous laser markable compositions are disclosed in for example for example WO2006/052842, WO2008/030428 and WO2014/124052.

Particular preferred aqueous laser markable compositions are disclosed in the applications PCT/EP2016/061069 (filed 18-05-2016) and PCT/EP2016/060533 (filed on 11-05-2016).

When the laser markable composition is used for the manufacture of food packaging or pharmaceutical applications, the laser markable composition is preferably a so-called "low migration" laser markable composition.

The term "low migration" packaging is commonly used to designate materials used in the packaging structure whose chemicals will not migrate, or move, from the packaging into the product. To qualify as low migration packaging, the materials contained in the packaging structure, including printing inks, coatings and adhesives, must not have any migratory chemicals which would affect the appearance, flavour, odour, taste, or the safety of the product contained within the packaging. Preferred low migration laser markable compositions, comprising for example diffusion hindered leuco dyes, optothermal converting agents, colour developing agents or colour developing agent precursors are disclosed in EP-A 15196923.5 (filed on 30-11-2015).

The laser markable composition preferably comprises a dye or pigment that enhances the contrast between the laser marked image and the background colour. In a particular preferred embodiment, the laser markable composition comprises a white pigment.

The white pigment may be an inorganic or an organic pigment.

The white pigment may be selected from titanium oxide, barium sulfate, silicon oxide, aluminium oxide, magnesium oxide, calcium carbonate, kaolin, or talc.

A preferred white pigment is titanium oxide.

Titanium oxide occurs in the crystalline forms of anatase type, rutile type and brookite type. The anatase type has a relatively low density and is easily ground into fine particles, while the rutile type has a relatively high refractive index, exhibiting a high covering power. Either one of these is usable in this invention. It is preferred to make the most possible use of characteristics and to make selections according to the use thereof. The use of the anatase type having a low density and a small particle size can achieve superior dispersion stability, ink storage stability and ejectability. At least two different crystalline forms may be used in combination. The combined use of the anatase type and the rutile type which exhibits a high colouring power can reduce the total amount of titanium oxide, leading to improved storage stability and ejection performance of ink.

For surface treatment of the titanium oxide, an aqueous treatment or a gas phase treatment is applied, and an alumina-silica treating agent is usually employed. Untreated-, alumina treated- or alumina-silica treated-titanium oxide are employable.

The volume average particle size of the white pigment is preferably between 0.03 µm and 0.8 µm, more preferably between 0.15 µm and 0.5 µm. When the volume average particle size of the white pigment is within these preferred ranges, the reflection of light is sufficient to obtain a sufficiently dense white colour. The volume average particle size may be measured by a laser diffraction/scattering type particle size distribution analyzer.

Preferred white pigments have a high refractive index, preferably a refractive index greater than 1.60, preferably greater than 2.00, more preferably greater than 2.50 and most preferably greater than 2.60. Such white pigments generally have a very covering power, i.e. a limited amount of white primer is necessary to hide the colour and defects of the substrate on which it is printed. Unfortunately, such white pigments also generally exhibit a high sedimentation degree and speed.

Suitable white pigments having high refractive index are given in Table 1. The white pigments may be employed singly or in combination. The most preferred white pigment is titanium dioxide.

**Table 1**

| **C.I. Number** | **Chemical name** | **CAS RN** |
|---|---|---|
| Pigment white 1 | Lead hydroxide carbonate | 1319-46-6 |
| Pigment white 3 | Lead sulphate | 7446-14-2 |
| Pigment white 4 | Zinc oxide | 1314-13-2 |
| Pigment white 5 | Lithopone | 1345-05-7 |
| Pigment white 6 | Titanium dioxide | 13463-67-7 |
| Pigment white 7 | Zinc sulphide | 1314-98-3 |
| Pigment white 10 | Barium carbonate | 513-77-9 |
| Pigment white 11 | Antimony trioxide | 1309-64-4 |
| Pigment white 12 | Zirconium oxide | 1314-23-4 |
| Pigment white 14 | Bismuth oxychloride | 7787-59-9 |
| Pigment white 17 | Bismuth subnitrate | 1304-85-4 |
| Pigment white 18 | Calcium carbonate | 471-34-1 |
| Pigment white 19 | Kaolin | 1332-58-7 |
| Pigment white 21 | Barium sulphate | 7727-43-7 |
| Pigment white 24 | Aluminum hydroxide | 21645-51-2 |
| Pigment white 25 | Calcium sulphate | 7778-18-9 |
| Pigment white 27 | Silicon dioxide | 7631-86-9 |
| Pigment white 28 | Calcium metasilicate | 10101-39-0 |
| Pigment white 32 | Zinc phosphate cement | 7779-90-0 |

### Leuco Dye

A leuco dye is a substantially colourless compound, which may form a coloured dye upon inter- or intra-molecular reaction. The inter- or intra-molecular reaction may be triggered by heat formed during exposure with an IR laser or by exposure to UV radiation.

Examples of leuco dyes are disclosed in WO2015/165854, paragraph [069] to [093].

Leuco dyes may become "diffusion hindered" by:
- including the leuco dye in the core of a capsule composed of a polymeric shell surrounding a core;
- polymerizing or co-polymerizing the leuco dye to form a polymeric leuco dye; or
- linking two or more basic leuco dyes to each other whereby the total molecular weight of the resulting compound becomes at least twice the molecular weight of the basic ingredient with the proviso that the total molecular weight is at least 500, more preferably at least 750 and most preferably at least 1000.

By using a diffusion hindered leuco dye, the risk of penetrating through a food or pharmaceutical packaging is minimized. Furthermore, the leuco dye cannot be extracted by moisture, e.g. by sweaty hands, before heat treatment or verification of the authenticity of the packaging.

Diffusion hindered leuco dyes are disclosed in EP-A 15196923.5 (filed on 30-11-2015).

### Optothermal converting agent

An optothermal converting agent generates heat upon absorption of radiation. The optothermal converting agent preferably generates heat upon absorption of infrared radiation, more preferably near infrared radiation. Near infrared radiation has a wavelength between 780 and 2500 nm.

Optothermal converting agents may be an infrared absorbing dye, an infrared absorbing pigment, or a combination thereof.

### Infrared radiation absorbing (IR) pigment

Suitable examples of infrared absorbing pigments include but are not limited to carbon black such as acetylene black, channel black, furnace black, lamp black, and thermal black; oxides, hydroxides, sulfides, sulfates and phosphates of metals such as copper, bismuth, iron, nickel, tin, zinc, manganese, zirconium, tungsten, lanthanum, and antimony including lanthane hexaboride, indium tin oxide (ITO) and antimony tin oxide, titanium black and black iron oxide.

A preferred infrared absorbing pigment is carbon black.

The particle size of the pigment is preferably from 0.01 to 5 µm, more preferably from 0.05 to 1µm.

The amount of the infrared absorbing pigment is between 10 and 1000 ppm, preferably between 25 and 750 ppm, more preferably between 50 and 500 ppm, most preferably between 100 and 250 ppm, all relative to the total dry weight of the laser markable layer. An amount of infrared absorbing pigment above 1000 ppm results in a too high background density of the laser markable article.

Aqueous dispersions of carbon black are preferably used in the present invention. Examples of such aqueous carbon black dispersions are CAB-O-JET® 200 and 300 from CABOT.

The IR dyes disclosed below may also be used as IR pigments, for example cyanine pigment, merocyanine pigment, etc.

Other suitable Infrared radiation absorbing pigments are disclosed in WO2005/068207, WO2007/141522, WO2009/059900, and WO2015/015200.

### Infrared radiation absorbing (IR) dye

Infrared absorbing dyes are preferred for their narrow absorption spectra, compared to pigments, enabling multicolour images to be formed.

In principle any IR dye may be used, for example the IR dyes disclosed in "Near-Infrared Dyes for High Technology Applications" (ISBN 978-0-7923-5101-6).

An advantage of using IR dyes is that the absorption spectrum of an IR dye tends to be narrower than that of an IR pigment. This allows the production of a multicoloured image when using a RFID tag comprising a plurality of laser markable layers, each laser markable layer containing different IR dyes and colour foming compounds. The IR dyes having a different maximum absorption wavelength can then be adressed by IR lasers with corresponding emission wavelengths causing colour formation only in the laser markable layer of the adressed IR dye. Such multicolour articles have been disclosed in for example US 4720449, EP-A 2719540 and EP-A 2719541.

When two or more laser markable compositions are used, the absorption maxima of infrared dyes preferably differ by at least 100 nm, more preferably by at least 150 nm, most preferably by at least 200 nm, particularly preferred by at least 250 nm.

According to a preferred embodiment, a first laser markable composition contains a first infrared dye IR-1 having an absorption maximum in the infrared region λₘₐₓ(IR-1), a second laser markable composition contains a second infrared dye IR-2 having an absorption maximum in the infrared region λₘₐₓ(IR-2), and a third laser markable composition contains a third infrared dye IR-3 having an absorption maximum in the infrared region λₘₐₓ(IR-3), wherein the conditions a) and b) are fulfilled:
a) λₘₐₓ(IR-1) > λₘₐₓ(IR-2) > λₘₐₓ(IR-3) ; and
b) λₘₐₓ(IR-1) > 1100 nm and λₘₐₓ(IR-3) < 1000 nm.

In a particularly preferred embodiment the condition c) is also fulfilled:
c) λₘₐₓ(IR-2) differs by at least 60 nm from λₘₐₓ(IR-1) and λₘₐₓ(IR-3).

In another preferred embodiment λₘₐₓ(IR-3) >_ 830 nm and λₘₐₓ(IR-1) ≤ 1125 nm.

Preferred IR dyes are polymethine dyes due to their low absorption in the visible region and their selectivity, i.e. narrow absorption peak in the infrared region. Particular preferred polymethine IR dyes are cyanine IR dyes.

Preferred IR having an absorption maximum of more than 1100 nm are those disclosed in EP-A 2722367, paragraphs [0044] to [0083] and WO2015/165854, paragraphs [0040] to [0051].

IR dyes having an absorption maximum between 1000 nm and 1100 nm are preferably selected from the group consisting of quinoline dyes, indolenine dyes, especially a benzo[cd]indoline dye. A particularly preferred IR dye is 5-[2,5-bis[2-[1-(1-methylbutyl)-benz[cd]indol-2(1H)-ylidene]ethylidene]-cyclopentylidene]-1-butyl-3-(2-methoxy-1-methylethyl)- 2,4,6(1H,3H,5H)-pyrimidinetrione (CASRN 223717-84-8) represented by the Formula IR-1, or the IR dye represented by Formula IR-2:

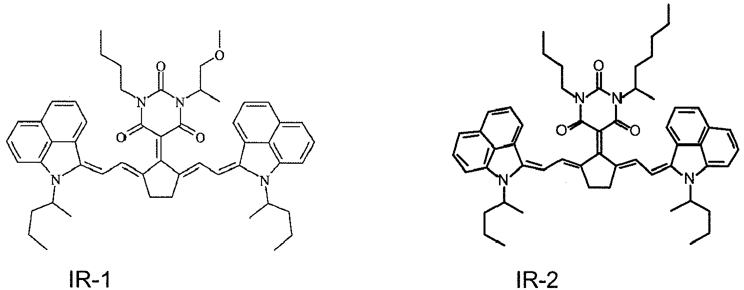

Both IR dyes IR-1 and IR-2 have an absorption maximum λₘₐₓ around 1052 nm making them very suitable for a Nd-YAG laser having an emission wavelength of 1064 nm.

IR dyes having an absorption maximum between 830 nm and 1000 nm are preferably selected from the group consisting of quinoline dyes, indolenine dyes, especially benzo[e]indolenine dyes, and benzo[f]indolenine dyes.

The amount of IR dye a dried laser markable layer is preferably between 0.01 and 1, more preferably between 0.025 and 0.5 wt % relative to the total dry weight of the coating. Enough IR dye has to be present to ensure sufficient colour density formation upon exposure to IR radiation. However, using too much IR dye may result in unwanted background colouration of the laser markable materials.

A combination of two, three or more IR dyes may be used in the laser markable layer. Such a combination of IR dyes may be used to optimize the absorption spectrum of the laser markable layer. Also, a mixture of IR dyes may improve the solubility of the IR dyes in the laser markable composition wherewith the laser markable layer is prepared.

Infrared absorbing dyes may become "diffusion hindered" by:
- including the optothermal converting agent in the core of a capsule composed of a polymeric shell surrounding a core;
- polymerizing or co-polymerizing the IR dye to form a polymeric IR dye; or
- linking two or more basic optothermal converting agent to each other whereby the total molecular weight of the resulting compound becomes at least twice the molecular weight of the basic ingredient with the proviso that the total molecular weight is at least 500, more preferably at least 750 and most preferably at least 1000.

By using a diffusion hindered optothermal converting agent, the risk of penetrating through a food or pharmaceutical packaging is minimized. Furthermore, the optothermal converting agent cannot be extracted by moisture, e.g. by sweaty hands, before heat treatment or verification of the authenticity of the packaging.

Diffusion hindered infrared dyes are disclosed in EP-A 15196923.5 (filed on 30-11-2015).

### Colour Developing agent

A colour developing agent is capable of reacting with a colourless leuco dye resulting in the formation of a coloured dye.

Various electron accepting substances may be used as colour developing agent in the present invention. Examples thereof include phenolic compounds, organic or inorganic acidic compounds and esters or salts thereof.

Specific examples include bisphenol A; tetrabromobisphenol A; gallic acid; salicylic acid; 3-isopropyl salicylate; 3-cyclohexyl salicylate; 3-5-di-tert-butyl salicylate; 3,5-di-α-methyl benzyl salicylate; 4,4'-isopropylidenediphenol; 1,1'-isopropylidene bis(2-chlorophenol); 4,4'-isopropylene bis(2,6-dibromo-phenol); 4,4'-isopropylidene bis(2,6-dichlorophenol); 4,4'-isopropylidene bis(2-methyl phenol); 4,4'-isopropylidene bis(2,6-dimethyl phenol); 4,4'-isopropylidene bis(2-tert-butyl phenol); 4,4'-sec-butylidene diphenol; 4,4'-cyclohexylidene bisphenol; 4,4'-cyclohexylidene bis(2-methyl phenol); 4-tert-butyl phenol; 4-phenyl phenol; 4-hydroxy diphenoxide; α-naphthol; β-naphthol; 3,5-xylenol; thymol; methyl-4-hydroxybenzoate; 4-hydroxy-acetophenone; novolak phenol resins; 2,2'-thio bis(4,6-dichloro phenol); catechol; resorcin; hydroquinone; pyrogallol; fluoroglycine; fluoroglycine carboxylate; 4-tert-octyl catechol; 2,2'-methylene bis(4-chlorophenol); 2,2'-methylene bis(4-methyl-6-tert-butyl phenol); 2,2'-dihydroxy diphenyl; ethyl p-hydroxybenzoate; propyl p-hydroxybenzoate; butyl p-hydroxy-benzoate; benzyl p-hydroxybenzoate; p-hydroxybenzoate-p-chlorobenzyl; p-hydroxybenzoate-o-chlorobenzyl; p-hydroxybenzoate-p-methylbenzyl; p-hydroxybenzoate-n-octyl; benzoic acid; zinc salicylate; 1-hydroxy-2-naphthoic acid; 2-hydroxy-6-naphthoic acid; 2-hydroxy-6-zinc naphthoate; 4-hydroxy diphenyl sulphone; 4-hydroxy-4'-chloro diphenyl sulfone;
bis(4-hydroxy phenyl)sulphide; 2-hydroxy-p-toluic acid; 3,5-di-tert-zinc butyl salicylate; 3,5-di-tert-tin butyl salicylate; tartaric acid; oxalic acid; maleic acid;
citric acid; succinic acid; stearic acid; 4-hydroxyphthalic acid; boric acid; thiourea derivatives; 4-hydroxy thiophenol derivatives; bis(4-hydroxyphenyl) acetate;
bis(4-hydroxyphenyl)ethyl acetate; bis(4-hydroxyphenyl)acetate-n-propyl; bis(4-hydroxy-phenyl)acetate-n-butyl; bis(4-hydroxyphenyl)phenyl acetate; bis(4-hydroxyphenyl)-benzyl acetate; bis(4-hydroxyphenyl)phenethyl acetate; bis(3-methyl-4-hydroxy-phenyl)acetate; bis(3-methyl-4-hydroxy-phenyl)methyl acetate;
bis(3-methyl-4-hydroxyphenyl)acetate-n-propyl; 1,7-bis(4-hydroxyphenylthio)3,5-dioxaheptane;
1,5-bis(4-hydroxy-phenylthio)3-oxaheptane; 4-hydroxy phthalate dimethyl;
4-hydroxy-4'-methoxy diphenyl sulfone; 4-hydroxy-4'-ethoxy diphenyl sulfone;
4-hydroxy-4'-isopropoxy diphenyl sulfone; 4-hydroxy-4'-propoxy diphenyl sulfone;
4-hydroxy-4'-butoxy diphenyl sulfone; 4-hydroxy-4'-isopropoxy diphenyl sulfone;
4-hydroxy-4'-sec-butoxy diphenyl sulfone; 4-hydroxy-4'-tert-butoxy diphenyl sulfone; 4-hydroxy-4'-benzyloxy diphenyl sulfone; 4-hydroxy-4'-phenoxy diphenyl sulfone;
4-hydroxy-4'-(m-methyl benzoxy)diphenyl sulfone; 4-hydroxy-4'-(p-methyl benzoxy)diphenyl sulfone; 4-hydroxy-4'-(o-methyl benzoxy)diphenyl sulfone;
4-hydroxy-4'-(p-chloro benzoxy)diphenyl sulfone and 4-hydroxy-4'-oxyaryl diphenyl sulfone.

A preferred colour developing agent is a metal salt of salicylic acid, for example zinc salicylate. A particularly preferred colour developing agent is zinc 3,5-bis(α-methylbenzyl) salicylate.

### Colour developing agent precursor

Also a so-called colour developing agent precursor may be used. Such a precursor forms a colour developing agent upon exposure to heat. Using a colour developing agent precursor instead of a colour developer agent may result in a better UV and heat stability of the laser markable compositon.

All publicly-known thermal acid generators can be used as colour developing agent. Thermal acid generators are for example widely used in conventional photoresist material. For more information see for example Encyclopaedia of polymer science", 4th edition, Wiley or "Industrial Photoinitiators, A Technical Guide", CRC Press 2010.

Preferred classes of photo- and thermal acid generators are iodonium salts, sulfonium salts, ferrocenium salts, sulfonyl oximes, halomethyl triazines, halomethylarylsulfone, α-haloacetophenones, sulfonate esters, t-butyl esters, allyl substituted phenols, t-butyl carbonates, sulfate esters, phosphate esters and phosphonate esters.

Preferred colour developing agents are disclosed in WO2015/091688 and have a chemical structure according to Formula (I) or Formula (II): 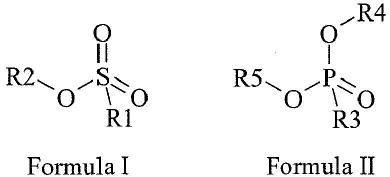 wherein
R1 and R3 independently represent an optionally substituted alkyl group, an optionally substituted (hetero)cyclic alkyl group, an optionally substituted alkanyl group, an optionally substituted alkenyl group, an optionally substituted alkynyl group, an optionally substituted (hetero)aryl group, an optionally substituted aralkyl group, an optionally substituted alkoxy group, an optionally substituted (hetero)cyclic alkoxy group, or an optionally substituted (hetero)aryloxy group. R2, R4 and R5 independently represent an optionally substituted alkyl, an optionally substituted aliphatic (hetero)cyclic alkyl group or an optionally substituted aralkyl group;
R1 and R2, R4 and R5, R3 and R4, and R3 and R5 may represent the necessary atoms to form a ring.

Colour developing agents or colour developing agent precursors may become "diffusion hindered" by:
- including the colour developing agent or colour developing agent precursor in the core of a capsule composed of a polymeric shell surrounding a core;
- polymerizing or co-polymerizing the colour developing agent or colour developing agent to form a polymeric colour developing agent or colour developing agent; or
- linking two or more basic colour developing agent or colour developing agent precursor to each other whereby the total molecular weight of the resulting compound becomes at least twice the molecular weight of the basic ingredient with the proviso that the total molecular weight is at least 500, more preferably at least 750 and most preferably at least 1000.

By using a diffusion hindered colour developing agent or colour developing agent, the risk of penetrating through a food or pharmaceutical packaging is minimized. Furthermore, the leuco dye cannot be extracted by moisture, e.g. by sweaty hands, before heat treatment or verification of the authenticity of the packaging.

Diffusion hindered colour developing agents or developing agent precursors are disclosed in EP-A 15196923.5 (filed on 30-11-2015).

### Acid Scavenger

The laser markable composition may contain one or more acid scavengers.

Acid scavengers include organic or inorganic bases.

Examples of the inorganic bases include hydroxides of alkali metals or alkaline earth metals; secondary or tertiary phosphates, borates, carbonates; quinolinates and metaborates of alkali metals or alkaline earth metals; a combination of zinc hydroxide or zinc oxide and a chelating agent (e.g., sodium picolinate); hydrotalcite such as Hycite 713 from Clariant; ammonium hydroxide; hydroxides of quaternary alkylammoniums; and hydroxides of other metals.

Examples of the organic bases include aliphatic amines (e.g., trialkylamines, hydroxylamines and aliphatic polyamines); aromatic amines (e.g., N-alkylsubstituted aromatic amines, N-hydroxylalkyl-substituted aromatic amines and bis[p-(dialkylamino)phenyl]-methanes), heterocyclic amines, amidines, cyclic amidines, guanidines and cyclic guanidines.

Other preferred acid scavengers are HALS compounds. Examples of suitable HALS include Tinuvin™ 292, Tinuvin™ 123, Tinuvin™ 1198, Tinuvin™ 1198 L, Tinuvin™ 144, Tinuvin™ 152, Tinuvin™ 292, Tinuvin™ 292 HP, Tinuvin™ 5100, Tinuvin™ 622 SF, Tinuvin™ 770 DF, Chimassorb™ 2020 FDL, Chimassorb™ 944 LD from BASF; Hostavin 3051, Hostavin 3050, Hostavin N 30, Hostavin N321, Hostavin N 845 PP, Hostavin PR 31 from Clariant.

Further examples of acid scavengers are salts of weak organic acids such as carboxylates (e.g. calcium stearate).

A preferred acid scavenger is an organic base, more preferably an amine. A particular preferred acid scavenger is an organic base having a pKb of less than 7.

### UV absorbers

The laser markable composition may also comprise a UV-absorber. The UV-absorber is however preferably present in a protective layer, provided on top of the printed laser markable image.

Examples of suitable UV-absorbers include 2-hydroxyphenyl-benzophenones (BP) such as Chimassorb™ 81 and Chimassorb™ 90 from BASF; 2-(2-hydroxyphenyl)-benzotriazoles (BTZ) such as Tinuvin™ 109, Tinuvin™ 1130, Tinuvin™ 171, Tinuvin™ 326, Tinuvin™ 328, Tinuvin™ 384-2, Tinuvin™ 99-2, Tinuvin™ 900, Tinuvin™ 928, Tinuvin™ Carboprotect™, Tinuvin™ 360, Tinuvin™ 1130, Tinuvin™ 327, Tinuvin™ 350, Tinuvin™ 234 from BASF, Mixxim™ BB/100 from FAIRMOUNT, Chiguard 5530 from Chitec; 2-hydroxy-phenyl-s-triazines (HPT) such as Tinuvin™ 460, Tinuvin™ 400, Tinuvin™ 405, Tinuvin™ 477, Tinuvin™ 479, Tinuvin™ 1577 ED, Tinuvin™ 1600 from BASF, 2-(2,4-dihydroxyphenyl)-4,6-bis-(2,4-dimethylphenyl)-s-triazine (CASRN1668-53-7) from Capot Chemical Ltd and 4-[4,6-bis(2-methyl-phenoxy)-1,3,5-triazin-2-yl]-1,3-benzenediol (CASRN13413-61-1); titanium dioxide such as Solasorb 100F from from Croda Chemicals; zink oxide such as Solasorb 200F from Croda Chemicals; benzoxazines such as Cyasorb UV-3638 F, CYASORB™ UV-1164 from CYTEC; and oxamides such as Sanduvor VSU from Clariant.

Preferred UV absorbers have in the wavelength region between 300 and 400 nm a maximum absorption above 330 nm, more preferably above 350 nm.

Particular preferred UV absorbers are hydroxyphenyl benzotriazoles and 2-hydroxyphenyl-s-triazines having a maximum absorption above 350 nm in the wavelength region 300 - 400 nm.

### EXAMPLES

### Materials

All materials used in the following examples were readily available from standard sources such as ALDRICH CHEMICAL Co. (Belgium) and ACROS (Belgium) unless otherwise specified. The water used was deionized water.

**Takenate D120N** is an aliphatic polyisocyanate commercially available from Mitsui.

**Mowiol 4 88** is a polyvinyl alcohol commercially available from Hoechst.

**Olfine E1010** is a wetting agent commercially available from Shin-Etsu Chemical Company.

**Arlo** is a 15 wt% aqueous solution of Marlon A365, commercially available from Brenntag.

**Proxel Ultra 5** is a biocide commercially available from Avecia.

**Ralox 46** is a sterically hindered phenolix antioxidant from Raschig.

**Tinuvin 928** is an UV absorber commercially available from BASF.

**DISFLAMOLL TKP** is a low volatility halogen free phosphate plasticer from Lanxess.

**MOW** is an aqueous solution of bearing 15 wt% Mowiol 4 88 and 2 wt% Proxelk.

**MEK** is an abbreviation used for methylethylketone.

**YLD** is a leuco dye prepared as follows: 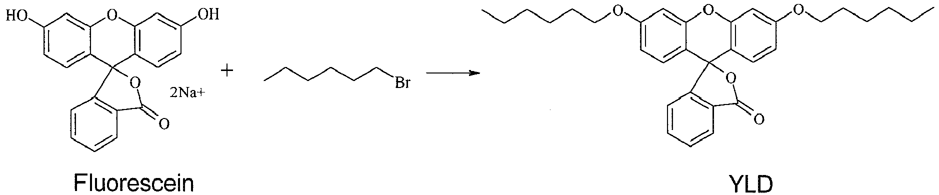 55 g fluorescein, disodium salt (Acros Chemicals) and 55 g potassium hydroxide were dissolved in 110 ml water. 150 g 1-bromohexane (Sigma-Aldrich) and 3 g tetrabutylammonium bromide (Merck) were added to the solution. The reaction mixture was stirred under reflux during 24h. 200 g toluene and 80 g water were added to the reaction mixture which was further stirred under reflux for 30 minutes. The organic phase was dried with sodium sulphate and evaporated under reduced pressure. The desired product was recrystallized from isopropanol. The compound was analysed using TLC-chromatography (TLC Silica gel 60 Partisil KC18F; supplied by Whatman, eluent: methanol, Rf: 0.4).

**BLD1** is a leuco dye with the following formula commercially available from Mitsui.

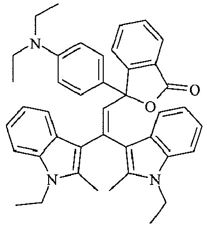

**BLD2** is a leuco dye with the following formula commercially available from Mitsui.

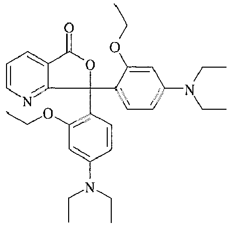

**BLD3** is a leuco dye with the following formula commercially available from Yamada Chemical Co.

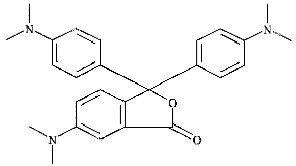

**MLD1** is a leuco dye with the following formula commercially available from Mitsui.

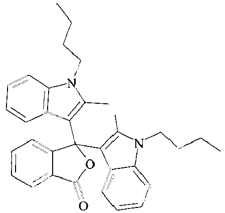

**MLD2** is a leuco dye with the following formula commercially available from Connect Chemical

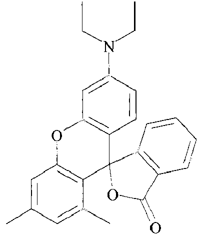

**MLD3** is a leuco dye with the following formula commercially available from Tokyo Kasei Kogyo

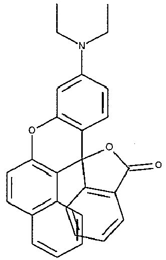

**1150IR** is an infrared dye with the following formula commercially available from Spectrum Info Ltd.

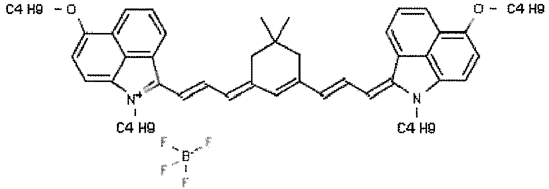

**1064IR** is an infrared dye having the following structure: 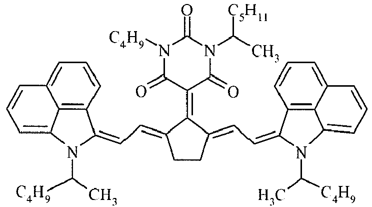 1064IR was prepared according to the synthetic methodology disclosed in paragraphs [0150] to [0159] of EP2463109 (Agfa).

**920IR** is an infrared dye prepared as follows: 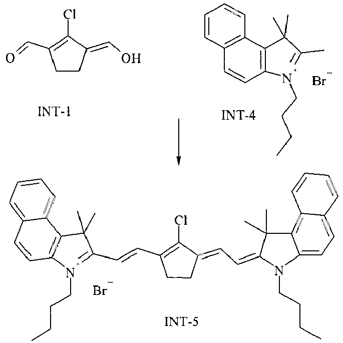 The synthesis of intermediate INT-1 was performed as follows: 10 mol of dimethylformamide and 3 mol phosphoryl chloride were heated up to 65°C. Then 1 mol of cyclopentanon was dropped to this mixture. After one hour of stirring at 60°C, the reaction mixture was poured into 2 l water containing 7 mol sodium acetate. INT-1 was filtered and dried. The yield was 60%. The compound was analyzed using TLC-chromatography (TLC Silica gel 60 F254; supplied by Merck, eluent: methylene chloride/ methanol 90/10, Rf: 0.75). The synthesis of the intermediate INT-4 was performed as described by paragraphs [0097] and [0098] of US20040182268 A1 (AGFA). To a stirred mixture of INT-1 (4.75 g; 30 mmol) and INT-4 (20.8 g; 60 mmol) in ethanol (100 mL) at room temperature were added consecutively triethylamine (12.1 g; 120 mmol) and acetic acid anhydride (12.2 g; 120 mmol). After heating to 50 °C for 1 hour, the reaction mixture was cooled to 20 °C and isopropanol (100 mL) was added. After 1 hour the precipitated IR-absorber was isolated by filtration, washed with EtOAc (20 mL) and dried in vacuo. Yield (crude) of INT-5 was 16 g (73%). The absorption maximum of INT-5 measured in methanol was 844 nm using a SHIMADZU UV-2101 PC spectrophotometer. 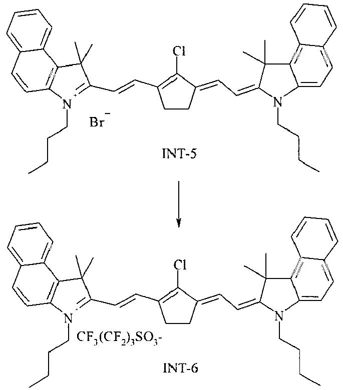 To a stirred suspension of INT-5 (16 g; 22 mmol) in acetonitrile (200 mL) was added potassium nonafluorobutanesulfonate (CASRN29420-49-3 from TCI Europe N.V.; 8.1 g; 24 mmol) and this mixture was heated at 70 °C for 15 minutes. After cooling to room temperature, water (100 mL) was drop wise added and after stirring for 2 hours the precipitated IR-absorber was isolated by filtration, washed consecutively with a mixture of acetonitrile / water 2/1 (20 mL), methyl t-butyl ether (20 mL) and dried in vacuum. The yield of INT-6 was 14 g (67%). The absorption maximum of INT-8 measured in methanol was 844 nm using a SHIMADZU UV-2101 PC spectrophotometer.

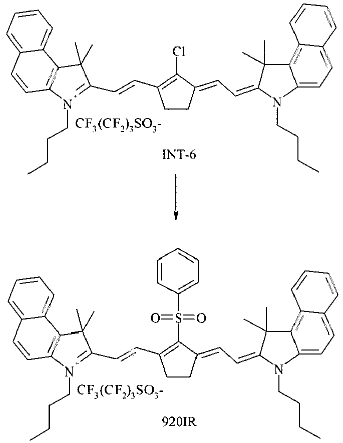

To a stirred suspension of INT-6 (1.65 g; 1.73 mmol) in methanol (15 mL) under nitrogen at room temperature is added sodium benzenesulfinate (CASRN873-55-2 from Aldrich; 0.297 g; 1.81 mmol). After stirring for 2 hours the precipitated IR-absorber was isolated by filtration, washed with MTBE (5 mL) and dried in vacuum. The yield of 920IR was 1.2 g (65%). The absorption maximum measured in methanol was 910 nm. The absorption maximum of 920IR measured in methylenechloride including 6.5 x 10-6 wt% of methanesulfonic acid was 923 nm using a SHIMADZU UV-2101 PC spectrophotometer.

### Preparation of dispersions

### Magenta dispersion MDISP

MDISP is a dispersion prepared as follows:
1.56 g Tinuvin 928, 11 g MLD1, 2.85 g MLD2 and 2.85 g MLD3 were added to 22.5 g ethyl acetate. 17.2 g Takenate D120N was added to the mixture. The mixture was stirred at 70 °C during 10 minutes in order to dissolve the components. The mixture was brought at 40 °C. 0.3 g 1064IR dissolved in 4 mL methylene chloride was added to the mixture.

In a separate flask, 0.2 g of Olfine E1010 was added to 6.9 g Mowiol 4 88 and 88 mL water.

The ethyl acetate-based solution was added to the aqueous solution. The mixture was emulsified using a T25 digital Ultra-turrax® with a 18N rotor commercially available from IKA at 16000 rpm during 5 minutes.
Ethyl acetate was removed under reduced pressure. During the process, also 13 mL of water was evaporated. 1.8 g Tetraethylenepentamine (CASRN112-57-2, Aldrich) in 13 mL water was added. This mixture was stirred for 16 hours at 60 °C and afterwards cooled to 25 °C. Large particles were removed by filtering the mixture using a cloth filter with 60 µm pores.

### Cyan dispersion CDISP

CDISP is a dispersion prepared as follows:
1.44 g Tinuvin 928, 5 g BLD1, 5 g BLD2 and 5 g BLD3 were added to 22 g ethyl acetate. 15.95 g Takenate D120N was added to the mixture. The mixture was stirred at 70 °C during 10 minutes in order to dissolve the components. The mixture was brought at 40 °C. 0.3 g 920IR dissolved in 4 mL methylene chloride was added to the mixture.

In a separate flask, 0.2 g of Olfine E1010 was added to 6.4 g Mowiol 4 88 and 135 mL water.

The ethyl acetate-based solution was added to the aqueous solution. The mixture was emulsified using a T25 digital Ultra-turrax® with a 18N rotor commercially available from IKA at 16000 rpm during 5 minutes.

Ethyl acetate was removed under reduced pressure. During the process, also 15 mL of water was evaporated. 1.7 g Tetraethylenepentamine (CASRN112-57-2, Aldrich) in 15 mL water was added. This mixture was stirred for 16 hours at 60 °C and afterwards cooled to 25 °C. Large particles were removed by filtering the mixture using a cloth filter with 60 µm pores.

### Yellow dispersion YDISP

YDISP is a dispersion prepared as follows:
2.1 g Tinuvin 928 and 22.4 g YLD were added to 17 g MEK. 23 g Takenate D120N was added to the mixture. The mixture was stirred at 50 °C during 10 minutes in order to dissolve the components. The mixture was brought at 40 °C. 0.2 g 1150IR dissolved in 12 g ethyl methyl ketone was added to the mixture. In a separate flask, 0.2 g of Olfine E1010 was added to 6.4 g Mowiol 4 88 and 135 mL water.

The ethyl acetate-based solution was added to the aqueous solution. The mixture was emulsified using a T25 digital Ultra-turrax® with a 18N rotor commercially available from IKA at 15000 rpm during 5 minutes. Ethyl acetate was removed under reduced pressure. During the process, also 22 mL of water was evaporated. 2.7 g Tetraethylenepentamine (CASRN112-57-2, Aldrich) in 22 mL water was added. This mixture was stirred for 16 hours at 60 °C and afterwards cooled to 25 °C. Large particles were removed by filtering the mixture using a cloth filter with 60 µm pores.

### Black dispersion BDISP

BDISP is a dispersion prepared as follows:
2.1 g Tinuvin 928 (commercially available from BASF), 5.47 g WINCON 205, 1.22 g Pergascript black IR, 3.04 g Pergascript Black 2C, 4.87 g MLD2, 4.87 g BLD1 and 2.43 g BLD2 were added to 32 g ethyl acetate. 23.1 g TAKENATE D120N was added to the mixture. The mixture was stirred at 70 °C during 10 minutes in order to dissolve the components. 0.25 g 10641R dissolved in 3 mL methylene chloride was added to the mixture. The mixture was brought to 25 °C. In a separate flask, 3 drops of OLFINE E1010 were added to 77 g MOWIOL 488 and 50 mL water. The ethyl acetate-based solution was added to the aqueous solution. The mixture was emulsified using a T25 digital Ultra-Turrax® with an 18N rotor commercially available from IKA at 15000 rpm during 5 minutes. Ethyl acetate was removed under reduced pressure. During the process, also 20 mL of water was evaporated and therefore, the same amount of water was added to the mixture after evaporation. 2.5 g tetraethylenepentamine (CASRN112-57-2, Aldrich) in 15.5 mL water was added. This mixture was stirred for 16 hours at 65 °C and afterwards cooled to 25 °C. Large particles were removed by filtering the mixture using a cloth filter with 60 µm pores.

### Developer dispersion DEVELOP

DEVELOP is a dispersion prepared as follows:
In Pot A, 55 g of Arlo, 4.4 g Proxel Ultra 5 (commercially available from Avecia) and 366.674 MOW were added to 524.601 g water. The mixture was stirred for 5 minutes at 50°C in order to dissolve all components.

In Pot B, 10.725 g 4,4'-Thiobis(6-tert-butyl-m-cresol) (commercially available from TCI Europe), 10.725 g Ralox 46 (commercially available from Raschig), 33 g Tinuvin 928 (commercially available from BASF), 8.25 g DISFLAMOLL TKP (commercially available from Lanxess), 4.125 g Ethyl Maleate (commercially available from TCI Europe) and 181.5 g Zinc 3,5-bis(alpha methylbenzyl) salicylate (CASRN53770-52-8, commercially available from Sanko Europe) were added to 495 g ethyl acetate. The mixture was stirred for 30 minutes at 50°C in order to dissolve all components. While Pot A was stirred with a HOMO-REX high speed homogenizing mixer, the solution in Pot B was added to Pot A. The mixture was further stirred during 5 minutes with the HOMO-REX mixer. Ethyl acetate was removed from the mixture under reduced pressure.

### Preparation of the laser markable RFID Tags

### Magenta Laser markable RFID tag (M_RFID)

A coating solution was prepared by mixing 1.37 g of MDISP, 3.03 g of Develop and 10.6 g of a 20.5 wt% solution of Mowiol 4 88 in water. The solution was subsequently coated with an Elcometer Bird Film Applicator (from ELCOMETER INSTRUMENTS) on an RFID tag with a wet coating thickness of 50 µm. The tag is then placed in an oven at 50 °C during 15 minutes.

### Cyan Laser markable RFID tag (C_RFID)

A coating solution was prepared by mixing 2.75 g of CDISP, 6.07 g of Develop and 6.19 g of a 20.5 wt% solution of Mowiol 4 88 in water. The solution was subsequently coated with an Elcometer Bird Film Applicator (from ELCOMETER INSTRUMENTS) on an RFID tag with a wet coating thickness of 50 µm. The tag is then placed in an oven at 50 °C during 15 minutes.

### Yellow Laser markable RFID tag (Y_RFID)

A coating solution was prepared by mixing 3.62 g of YDISP, 10.74 g of Develop and 0.64 g of a 20.5 wt% solution of Mowiol 4 88 in water. The solution was subsequently coated with an Elcometer Bird Film Applicator (from ELCOMETER INSTRUMENTS) on an RFID tag with a wet coating thickness of 50 µm. The tag is then placed in an oven at 50 °C during 15 minutes.

### Magenta + Cyan Laser markable RFID tag (MC_RFID)

A coating solution A was prepared by mixing 1.37 g of MDISP, 3.03 g of Develop and 10.6 g of a 20.5 wt% solution of Mowiol 4 88 in water. A second coating solution B was prepared by mixing 2.75 g of CDISP, 6.07 g of Develop and 6.19 g of a 20.5 wt% solution of Mowiol 4 88 in water. The solution A was coated with an Elcometer Bird Film Applicator (from ELCOMETER INSTRUMENTS) on an RFID tag with a wet coating thickness of 50 µm. The tag is then placed in an oven at 50 °C during 15 minutes. Next, coating solution B was coated on the same tag with an Elcometer Bird Film Applicator (from ELCOMETER INSTRUMENTS) with a wet coating thickness of 50 µm.

### Black Laser markable RFID tag (B_RFID)

A coating solution was prepared by mixing 1.32 g of BDISP, 2.64 g of Develop and 11.04 g of a 12 wt% solution of Mowiol 4 88 in water. The solution was subsequently coated with an Elcometer Bird Film Applicator (from ELCOMETER INSTRUMENTS) on an RFID tag with a wet coating thickness of 50 µm. The tag is then placed in an oven at 50 °C during 15 minutes.

### Laser marking of the laser markable RFID tags

A first optically pumped semiconductor laser emitting at 1064 nm (Genesis MX 1064-10000 MTM from COHERENT) was used for producing a magenta coloured barcode of 28 x 17.14 mm and a QR code of 16.5 x 16.5 mm dimension on the laser markable RFID tag M_RFID. The used laser settings are represented in Table 2.

A second optically pumped semiconductor laser emitting at 920 nm (MX 1154-6000 MTM from COHERENT) was used for producing a cyan coloured barcode of 28 x 17.14 mm and a QR code of 16.5 x 16.5 mm dimension on the laser markable RFID tag C_RFID. The used laser settings are represented in Table 2.

A third optically pumped semiconductor laser emitting at 1154 nm (MX 1154-6000 MTM from COHERENT) was used for producing a yellow coloured barcode of 28 x 17.14 mm and a QR code of 16.5 x 16.5 mm dimension on the laser markable RFID tag Y_RFID. The used laser settings are represented in Table 2.

A cyan coloured barcode of 28 x 17.14 mm and a magenta coloured logo (AGFA logo) were produced with the lasers described above emitting at respectively 920 nm and 1064 nm on the laser markable RFID tag MC_RFID. The used laser settings are represented in Table 2.

**Table 2**

| RFID | Laser Mark | Laser wavelength (nm) | Laser Power (1) | Speed (mm/s) | Frequency (kHz) | Duration of laser ON phase (µs) |
|---|---|---|---|---|---|---|
| M_RFID | 1D Barcode | 1064 | 39 | 2000 | 100 | 14 |
| M_RFID | QR code | 1064 | 25 | 250 | 5 | 97 |
| C_RFID | 1D Barcode | 920 | 44 | 2000 | 100 | 14 |
| C_RFID | QR code | 920 | 23 | 250 | 5 | 97 |
| Y_RFID | QR code | 1154 | 32 | 250 | 5 | 97 |
| B_RFID | 1D Barcode | 1064 | 39 | 2000 | 100 | 14 |
| MC_RFID | 1D Barcode | 920 | 37 | 2000 | 100 | 14 |
| | Logo | 1064 | 24 | 250 | 5 | 97 |

| | | | | | | |
|---|---|---|---|---|---|---|
| (1) % of the maximum current of the laser | | | | | | |

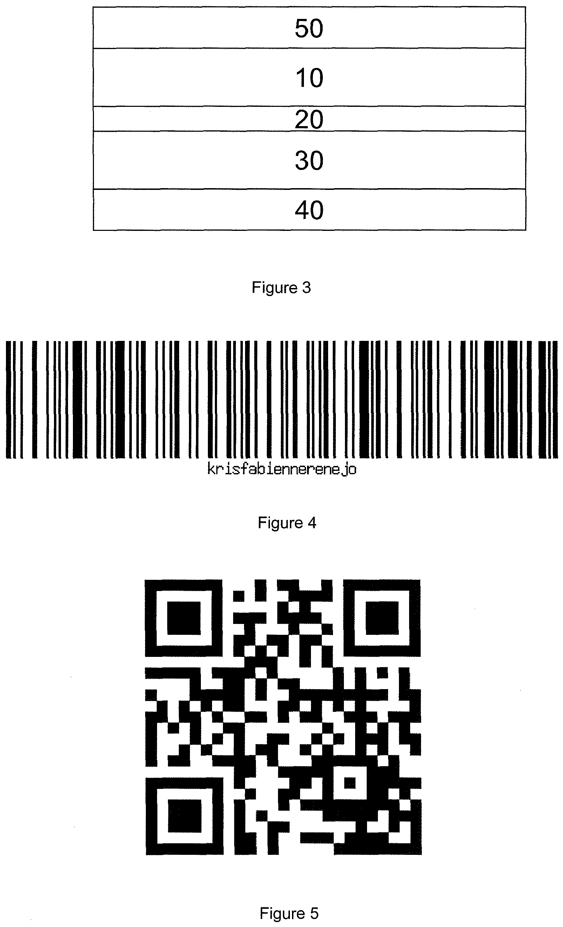

A 1 D Barcode as shown in Figure 4 and a QR code as shown in Figure 5 were laser marked using the SAMlight Software, commercially available from SCAPS GmbH.

The QR code, a grayscale bitmap of 330 x 330 pixels, imported into the SAMlight software, was laser marked at 50 µm interdot-spacing, resulting in a QR code having a 16.5 x 16.5 mm dimension.

The 1 D barcode, was laser marked using a vector graphics element, available in the SAMlight software. The encoded text was krisfabiennerenejo. The dimension of the 1 D barcode was 28.00 x 17.14 mm. Hatching (filling up the solid areas) was carried out by vertical lines at 40 µm spacing.

After laser marking the data of the RFID could still be read using a smart phone equipped with the proper software.

## Claims

1. An RFID tag comprising a RFID transponder and a laser markable layer.

2. The RFID tag according to claim 1 wherein the laser markable layer is capable of forming an irreversible laser marked image upon exposure to laser radiation.

3. The RFID tag according to claim 1 or 2 comprising a laser markable layer (10), an RFID inlay (20), an adhesive (30) and a release liner (40).

4. The RFID tag according to any of the preceding claims further comprising a transparent polymeric support (50) on top of the laser markable layer.

5. The RFID tag according to any of the preceding claims wherein the laser markable layer further comprises a dye or pigment capable of enhancing the contrast between a laser marked image and non-laser marked areas of the laser markable layer.

6. The RFID tag according to claim 5 wherein the pigment is a white pigment.

7. The RFID tag according any of the preceding claims comprising at least two different laser markable layers, each layer capable of forming an image having a different colour upon exposure to laser radiation.

8. The RFID tag according to any of the preceding claims wherein the laser markable layer(s) comprise a leuco dye, an optothermal converting agent and a colour developing agent or colour developing agent precursor.

9. An article or packaging comprising a RFID tag as defined in any of the preceding claims.

10. A method of laser marking a RFID tag as defined in any of the claims 1 to 8 comprising a laser marking step of exposing the RFID tag to a laser thereby forming a laser marked image.

11. The method according to claim 10 wherein the RFID tag is already applied on an article or a packaging before exposing it to the laser.

12. The method according to claim 10 or 11 wherein the laser is a near infrared laser.

13. The method according to any of the claims 10 to 12 wherein the laser marked image includes a 1 D or 2D barcode.

14. The method according to any of the claims 10 to 13 wherein before the laser marking step at least part of the information stored in the RFID transponder is read and used to form the laser marked image.

15. A method of authentication an article or a packaging comprising a laser marked RFID tag according to any of the claims 1 to 8 comprising the steps of:
- reading the information contained in the laser marked image using a digital imaging device,
- determining if the read information contains a command for reading the RFID transponder, and
- executing the command and reading the information contained in the RFID transponder.
